# DEMANDE DE BREVET EUROPEEN

(11) **EP 1 626 288 A1**
(43) Date de publication de la demande: **15.02.2006**
(21) Numéro de dépôt: 04292047.0
(22) Date de dépôt: 13.08.2004
(51) Int. Cl.: G01S 5/02, G01S 5/14

(54) **Système de géolocalisation hybride**

(71) Demandeur: Henry, Frédéric, 1025 Saint-Sulpice (CH); Henry, Richard, 1131 Tolochenaz (CH); Rooss, Gilles, 1815 Clarens (CH)
(72) Inventeur: Henry, Frédéric, 1025 Saint-Sulpice (CH); Henry, Richard, 1131 Tolochenaz (CH); Rooss, Gilles, 1815 Clarens (CH)
(74) Mandataire: Breese, Pierre

(57) **Abrégé**

La présente invention se rapporte à la géolocalisation d'un équipement mobile.

La présente invention se rapporte à un procédé de géolocalisation d'un équipement mobile (EM) par un système de géolocalisation, ledit EM comprenant des moyens de géolocalisation propres caractérisé en ce que ledit procédé comprend les étapes de :
- transmission (T1) des données issues desdits moyens de géolocalisation audit système de géolocalisation, la transmission étant réalisée de manière redondante sur un réseau de télécommunications mobiles ;
- détermination d'une position de l'EM en temps réel par traitement des données de géolocalisation reçues de sources multiples.

## Description

La présente invention se rapporte à la géolocalisation d'un équipement mobile.

La présente invention concerne plus particulièrement un procédé de géolocalisation d'un équipement mobile réalisant une évaluation et un arbitrage des positions fournies par différentes sources de géolocalisation. Une telle invention peut être utilisée :
- à des fins médicales pour la surveillance de personnes atteintes de la maladie d'Alzheimer, l'assistance médicales à l'étranger, l'assistance médicale de personnes en général.
- pour l'assistance automobile sous la forme d'assistance à la personne lors de panne ou problèmes techniques sur le véhicule
- pour la gestion et la supervision des travailleurs isolés

Chaque technologie de géolocalisation utilise une ou plusieurs références pour calculer la position géographique de la personne : satellites (GPS), réseau de l'opérateur, balises spécifiques, ou la combinaison de certaines de ces références. Suivant l'endroit géographique de la personne, ces références sont plus ou moins fiables, voire indisponibles, ce qui a pour conséquence d'augmenter significativement la marge d'erreur (à +/- une certaine distance). Des systèmes de géolocalisation statiques peuvent évaluer les positions données par plusieurs technologies et indiquer la position optimale, après combinaison et recalcul.

Lors du suivi d'un Elément Mobile (EM), certaines technologies peuvent ainsi être disponibles pour effectuer une géolocalisation à l'instant t, et ne plus l'être à l'instant t+1 : passage dans un tunnel, entrée dans un bâtiment, etc. Or, ne retenir comme position optimale que celle calculée en fonction des technologies fonctionnant à t+1, peut conduire à une perte de précision importante.

A titre d'exemple, il suffit d'imaginer une position fournie à partir du GPS à l'instant t, et celle fournie ensuite par une approche Cell-ID à t+1. Le GPS ne fonctionne plus, mais l'EM n'a bougé que de quelques mètres. Or, sa position évaluée est passée d'une précision de 3 mètres à près de 300 mètres.

De manière intuitive, on réalise facilement qu'utiliser la dernière 'meilleure' position conservée en mémoire, peut conduire également à des erreurs importantes. Il suffit d'imaginer un EM se déplaçant rapidement et pour lequel le GPS ne fonctionne plus et qui est suivi à l'aide d'une autre technologie de géolocalisation moins précise.

De plus, lors du suivi d'un EM lors sur une période de temps, les informations de localisation peuvent arriver à des moments décalés, en particulier dans le cas d'un système statique (détermination de la meilleure position parmi plusieurs positions données par des technologies différentes) après une évaluation de positions. Or, cette donnée peut être excessivement précise, mais reste complètement ignorée par ce type de systèmes qui a déjà procédé au calcul.

L'art antérieur connaît déjà, par la demande de brevet PCT WO 98 / 010 538 (Charles L. KARR), un système de localisation pour infrastructures de télécommunications commerciales sans fil. Le système est une solution de bout en bout présentant un ou plusieurs systèmes de localisation destinés à produire les localisations voulues de combinés ou de stations mobiles (SM) disponibles dans le commerce, basée sur les normes de communications, par exemple, AMPS (Service téléphonique mobile évolué), NAMPS (Service mobile perfectionné à bandes étroites), AMDC ou AMRT, afin de traiter les demandes de localisation de stations mobiles à la fois locales et mondiales par, par exemple, des communications Internet dans un réseau réparti de systèmes de localisation. Le système utilise une pluralité de technologies de localisation de stations mobiles, notamment celles basées sur le TOA (instant d'arrivée) et le TDOA (différence de temps d'arrivée) bidirectionnels ; des stations de base locales et des antennes réparties. En outre, le système peut être configuré de façon modulaire afin d'être utilisé dans des environnements de signalisation allant des environnements urbains, urbains denses, de périphérie, ruraux, de montagne jusqu'aux routes à faible trafic ou isolées. Par conséquent, le système est utile pour les appels d'urgence (911), la poursuite, les itinéraires, la localisation de personnes et d'animaux, notamment des applications de confinement dans certaines zones et d'exclusion de certaines zones

L'art antérieur connaît également, par le brevet américain US 5 981 324 (Nortel Networks), un système de géolocalisation efficace. Celui-ci combine les aspects des technologies GPS et cellulaires. Dans un premier mode de réalisation de l'invention, un réseau cellulaire est utilisé pour collecter les données de correction d'erreur GPS-différentiel puis transmettre ces données à un terminal mobile par le réseau cellulaire. Le terminal mobile reçoit ces données associées avec les pseudo-intervalles GPS fournis par un récepteur GPS, et calcule sa position en utilisant ces informations. Selon un deuxième aspect de l'invention, lorsque le nombre requis de satellites GPS n'est pas accessible par le terminal mobile, alors un signal pseudosatellite GPS, émis depuis une station de base du réseau cellulaire, est reçu par le terminal mobile. Ce dernier opère alors une substitution du signal satellite GPS manquant. Un troisième aspect implique le calcul de la position en utilisant le GPS lorsque le nombre requis de satellites GPS est accessible par un récepteur GPS, mais lorsque le nombre requis de satellites GPS n'est pas accessible par le récepteur GPS, la position est alors calculée en utilisant l'infrastructure de réseau cellulaire. Lorsque le nombre requis de satellites GPS est de nouveau accessible par le récepteur de GPS, alors la position est de nouveau calculée en utilisant le GPS. Un quatrième aspect implique l'utilisation de signaux cellulaires déjà transmis depuis des stations de base vers les terminaux dans un réseau cellulaire afin de calculer un délai aller-retour, à partir duquel un calcul de distance entre la station de base et le terminal peut être effectué. Ce calcul de distance remplace un signal absent de satellite GPS. Cette solution ne tient pas compte de la géolocalisation dynamique.

L'art antérieur connaît également, par la présentation Bouygues Télécom lors de la réunion « Traçabilité, mobilité et confiance » du 27 avril 2004 de la Fondation Internet Nouvelle Génération (FIND), le projet EMILY qui vise à optimiser le processus de géolocalisation. EMILY est un système de localisation avancée pour stations mobiles en combinant les technologies de localisation cellulaire et satellite. Cette solution n'évoque ni la localisation dynamique ni la redondance dans la transmission des données de la station mobile au système de géolocalisation.

Enfin, on connaît également, dans l'état de la technique, la solution *Cambridge Positionning System* (www.cursor-system.com) qui calcule la position optimale de localisation à partir d'informations issues de plusieurs technologies. Cependant, ce système est considéré comme statique et revient par défaut à la position fournie par la méthode Cell-ID.

L'art antérieur n'aborde ni n'apporte de solution à la géolocalisation d'un EM pendant une certaine période (géolocalisation dynamique) avec la question essentielle de la fiabilité de la position géographique.

La présente invention se propose donc de résoudre la variation de la précision lors de la géolocalisation d'un EM sur une période de temps. Ce problème touche toutes les solutions d'assistance à la personne (médical, automobile) ou la gestion de travailleurs isolés, et en limite fortement la fiabilité.

De plus, l'invention propose des moyens de sécurisation par redondance assurant la continuité de la liaison avec l'unité mobile à localiser ainsi que la redondance de certaines informations clés propres à l'EM.

La présente invention entend remédier aux inconvénients de l'art antérieur en proposant un procédé de géolocalisation d'équipements mobiles :
- en adaptant de façon dynamique la fréquence de la mesure en fonction des sources de géolocalisation disponibles, des contraintes du système (dynamique du mobile, temps de réponse, ...) et de la dynamique de l'EM ;
- en déterminant de manière dynamique la position la plus fiable de l'EM à partir de sources de géolocalisation multiples et non synchronisées ;
- en utilisant des données de localisation pré-événementielle pour donner plus rapidement une position fiable de l'EM.

Le procédé selon la présente invention répond particulièrement bien aux besoins d'assistance médicale. L'équipement mobile permet de :
- activer toute la chaîne d'assistance ;
- identifier qui a déclenché l'assistance ;
- transmission de la position GPS si le téléphone en est équipé ;
- transmission de données figées propres à la personne et mémorisées dans son équipement mobile, avec la position GPS ;
- présenter le dossier médical téléchargé par GPRS.

Une fois l'assistance déclenchée, le système d'assistance médicale utilise le système de localisation de l'opérateur de téléphonie mobile pour localiser et suivre la personne. Cette localisation est complétée le cas échéant par la position indiquée par le GPS du mobile.

Dans le cas où la personne ne répond pas à l'appel de l'opérateur d'assistance, ou en cas d'intervention médicalisée nécessaire, le dossier médical est téléchargé sur le téléphone mobile. Le médecin ou l'urgentiste a donc accès immédiatement aux informations clés dès son arrivée auprès de la personne.

Les principales informations figées liées à la personne (groupe sanguin, antécédents, allergies médicamenteuses,...) sont codées et archivées dans l'équipement mobile. Cette information est transmise liée aux informations de positionnement et permet d'assurer une redondance. Après réception, cette information peut être directement interprétée et utilisée, ou recherchée dans une base de données à partir de l'identifiant unique de l'EM.

A cet effet, l'invention concerne dans son acception la plus générale un procédé de géolocalisation d'un équipement mobile (EM) par un système de géolocalisation, ledit EM comprenant des moyens de géolocalisation propres caractérisé en ce que ledit procédé comprend les étapes de :
- transmission (T1) des données issues desdits moyens de géolocalisation audit système de géolocalisation, la transmission étant réalisée de manière redondante sur un réseau de télécommunications mobiles ;
- détermination d'une position de l'EM en temps réel par traitement des données de géolocalisation reçues de sources multiples.

De préférence, ladite redondance est effectuée par un envoi d'au moins un message du type SMS et par une connexion en mode paquet du type GPRS.

Selon une variante, ladite redondance met en oeuvre au moins une connexion UMTS.

De préférence, ladite position de l'EM déterminée par le système de géolocalisation est recalculée dynamiquement en temps réel, c'est-à-dire à chaque arrivée de nouvelles données de position.

Avantageusement, ladite transmission (T1) s'accompagne de la transmission de l'identifiant unique de l'EM et en ce que ledit procédé comprend, en outre, une étape de détermination d'une position de l'EM par l'opérateur téléphonique.

Selon un mode de mise en oeuvre, ladite étape de détermination par l'opérateur téléphonique met en oeuvre l'analyse du signal émis par l'EM et reçu par une station de base d'une cellule du réseau de télécommunications mobiles (technologie Cell-ID).

Selon une variante, ladite étape de détermination par l'opérateur téléphonique est réalisée par triangulation (technologie OTDOA en 3G, E-OTD en 2G).

Selon une autre variante, ladite étape de détermination par l'opérateur téléphonique met en oeuvre le A-GPS.

Dans un mode de réalisation, ledit traitement des données de géolocalisation consiste en une comparaison desdites données.

De préférence, ledit procédé comprend, en outre, une étape d'historisation desdites données issues des moyens de géolocalisation sur l'EM et une étape de transmission (T2) audit système d'au moins une partie desdites données historisées.

Avantageusement, ledit procédé comprend, en outre et préalablement à ladite étape de détermination, une étape de détermination d'une position de l'EM sur la base desdites données d'historisation transmises.

De préférence, ledit procédé comprend, en outre, une étape de détermination des meilleures secondes positions en rejouant lesdites données d'historisation.

Selon un mode de réalisation particulièrement avantageux, la fréquence de géolocalisation dudit système est adaptée en fonction de la dynamique de l'EM.

De préférence, la fréquence de géolocalisation dudit système est adaptée en fonction des temps de réponse et de la précision des moyens de géolocalisation associées auxdites sources multiples.

Avantageusement, ledit procédé comprend, en outre, une étape de détermination d'une seconde position, ladite seconde position étant antérieure et plus précise que ladite première position.

De préférence, ledit procédé comprend, en outre, une étape d'envoi par ledit système d'un ensemble de données personnelles sur ledit équipement mobile.

Selon un mode de mise en oeuvre, lesdits moyens de géolocalisation mettent en oeuvre un GPS (*Global Positionning System*).

Selon une variante, lesdits moyens de géolocalisation mettent en oeuvre un A-GPS (*Assisted Global Positionning System*).

Selon un mode de réalisation préféré, lesdites données transmises lors de l'étape (T1) comprennent un identifiant unique de l'équipement mobile, les coordonnées déterminées par lesdits moyens de géolocalisation et une donnée d'horodatage.

Selon une variante, lesdites données transmises lors de l'étape (T1) comprennent, en outre, des données personnelles.

Selon un autre mode de mise en oeuvre, ledit procédé comprend, en outre, une étape de détermination par ledit EM du changement de code pays et opérateur CO (*roaming*) et d'adaptation des connexions entre l'EM et ledit système de géolocalisation en fonction des caractéristiques réseaux de ce nouveau CO.

La présente invention se rapporte également à un équipement mobile de géolocalisation du type téléphone mobile ou assistant personnel, caractérisé en ce qu'il comprend :
- des moyens de géolocalisation ;
- des moyens de transmission sur un réseau GSM de données sous forme de message type SMS ;
- des moyens de transmission sur un réseau GPRS ; et
- un module réalisant l'interfaçage entre eux de ces différents moyens.

De préférence, ledit équipement comprend, en outre, des moyens d'historisation des données issues desdits moyens de géolocalisation.

La présente invention se rapporte également à un système de géolocalisation dudit équipement mobile, caractérisé en ce qu'il comprend un centre de géolocalisation, des moyens de connexion par un réseau téléphonique entre ledit centre et ledit équipement mobile, des moyens de connexion entre ledit centre et des sources de géolocalisation.

Elle se rapporte également à un système de géolocalisation dudit équipement mobile pour la mise en oeuvre du procédé.

On comprendra mieux l'invention à l'aide de la description, faite ci-après à titre purement explicatif, d'un mode de réalisation de l'invention, en référence aux figures annexées :
- la figure 1 représente l'architecture générale du système de géolocalisation selon la présente invention ;
- la figure 2 représente une architecture d'assistance médicale mettant en oeuvre la présente invention ;
- les figures 3 et 4 représentent le schéma fonctionnel de l'étape d'initialisation et d'acquisition de l'information dans le système de géolocalisation ;
- les figures 5 et 6 représentent le schéma fonctionnel de l'évaluation de la dynamique du système ;
- les figures 7 à 9 illustrent les mécanismes de détermination dynamique de la position dans le système de géolocalisation de la présente invention ; et
- la figure 10 illustre la détermination pré-événementielle de la position, notamment aux premiers instants de la période de géolocalisation.

La présente invention met en oeuvre un procédé de géolocalisation d'équipements mobiles.

L'intérêt du procédé de la présente invention est de permettre la géolocalisation d'un équipement mobile par combinaison de plusieurs technologies de géolocalisation. Un arbitrage dynamique de ces technologies permet d'optimiser la localisation. En outre, la présente invention réalise une adaptation de la fréquence de géolocalisation pour répondre aux déplacements plus ou moins rapides du terminal mobile et intègre la détermination pré-événementielle.

On compte aujourd'hui 4 principales technologies permettant de localiser un équipement mobile (EM) doté d'un équipement de type téléphone mobile.

### Technologie GPS (Global Positionning System)

Le système GPS fournit la position géographique précise de l'EM grâce aux références fournies par plusieurs satellites. Le nombre de satellites 'captés' ainsi que l'écart à certaines valeurs de référence (orbite du satellite, retard ionosphérique, retard troposphérique,...) conditionnent la précision de la position déterminée. La précision est de l'ordre de quelques mètres, ce qui en fait un système précis mais peu fiable.

### Technologie Cell-ID (utilisation du réseau de l'opérateur de téléphonie mobile)

Tout téléphone mobile activé est lié à une antenne couvrant une cellule (Cell), sorte de zone géographique. L'analyse du signal reçu par l'antenne (angle et intensité du signal, i.e. distance à la borne) permet de définir de manière approximative la position géographique x, y du téléphone mobile et donc de son utilisateur.

L'état de la technique montre que la précision est de l'ordre de 50 mètres en milieu urbain, 200 à 300 mètres en milieu péri-urbain et plusieurs kilomètres dans des zones de campagne. La couverture GSM dans la plupart des pays européens est supérieure à 90% du territoire.

L'arrivée de l'UMTS devrait permettre d'augmenter cette précision de manière importante.

### Technologie A-GPS (Assisted GPS)

Le principe de base du A-GPS est de fournir à l'équipement les correctifs et informations qui permettent une mesure fiable et rapide. Les points de référence du réseau de l'opérateur captent en permanence les satellites et établissent les correctifs, pour les fournir au mobile en cas de demande d'activation du A-GPS.

Cette technologie reste au final lié aux capacités du GPS, certes améliorées, mais devient tributaire d'éléments externes, en particulier l'intégrité du temps réel (horloges atomiques des satellites).

### Technologie OTDOA (Observed Time Difference of Arrival) - Technologie E-OTD (Enhanced Observed Time Difference)

Plus sophistiquées que la méthode Cell-ID, ces technologies combinent plusieurs bornes pour établir une position fiable. La géolocalisation par triangulation de signaux reçus par des stations de base d'un réseau de télécommunications mobiles entre dans ces technologies. OTDOA est à la 3G des télécommunications mobiles ce que E-OTD est à la 2G.

La principale limite de ces technologies est la géométrie du réseau qui peut affecter la marge d'erreur de manière importante.

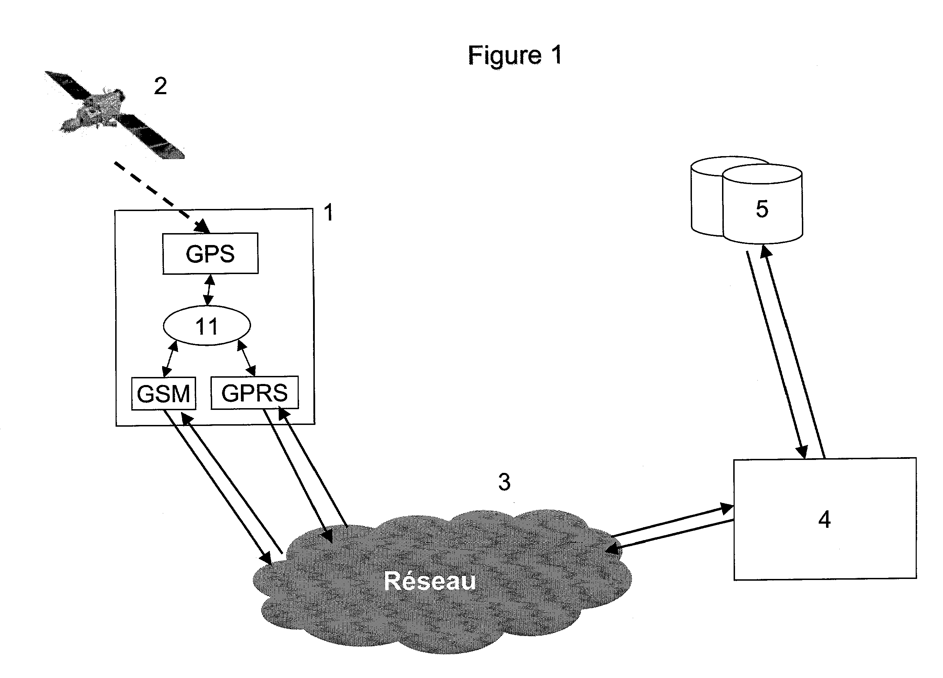

L'architecture de la présente invention est illustrée par la figure 1. Le terminal mobile (1) comprend un module récepteur GPS recevant les signaux de la flotte de satellites (2) et fournissant la position géographique du mobile. (1) comprend également des moyens de communication avec les réseaux de télécommunications (3), notamment en GSM (*Global System for Mobile Communications*)-SMS et GPRS (*General Packet Radio Service*) et un module (11) de type processeur réalisant l'interfaçage entre ces différents moyens (GPS, GSM, GPRS), et il transmet au système de géolocalisation (4) les données de positionnement. Le système (4) détermine la meilleure position du mobile (1) en faisant appel à des ressources externes (5), du type solution de géolocalisation d'un opérateur de téléphonie mobile, base de données des opérateurs, ...

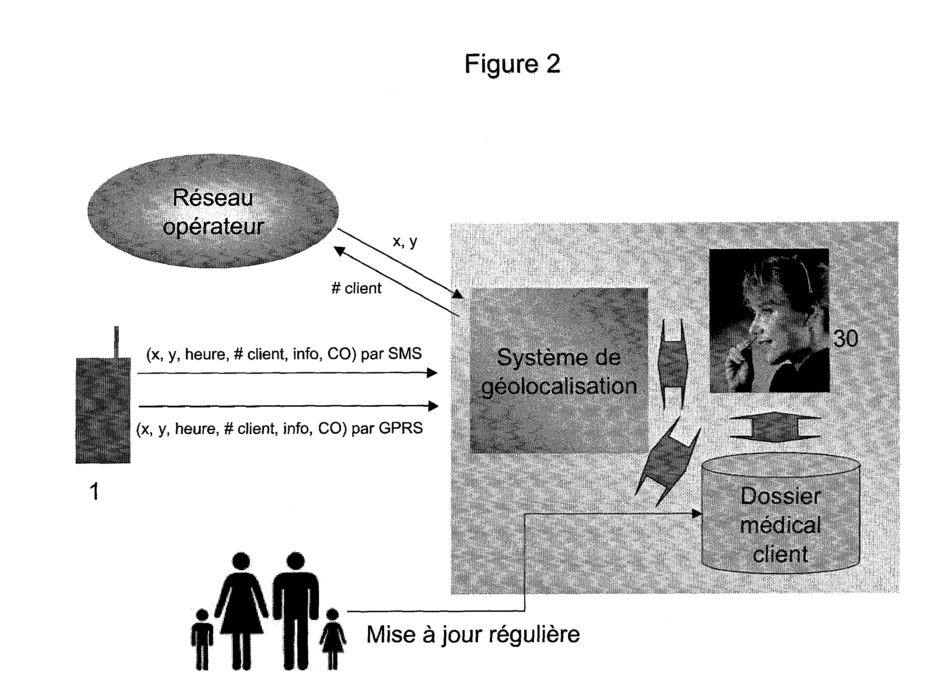

La figure 2 illustre l'application de la présente invention au domaine de l'assistance médicale, et plus précisément l'assistance médicale aux seniors. Ces derniers ou des personnes habilitées mettent à jour leurs dossiers médicaux, par exemple par Internet. Lorsqu'un problème d'ordre médical survient à un client, le terminal (1) est activé pour envoyer, de façon redondante (SMS et GPRS), les informations de localisation, d'identifiant client, des données figées personnelles codifiées (groupe sanguin, antécédents cardiaques ou pas, allergies, ...) et d'heure. Le système de géolocalisation effectue des requêtes vers les systèmes des opérateurs pour obtenir des positions géographiques du client complémentaires de sorte à affiner la position définitive.

En cas de *roaming* (l'EM passe du réseau d'un opérateur à celui d'un autre), l'EM détecte le changement de réseau et informe le système qui adapte ses requêtes en les dirigeant sur le système de l'opérateur concerné.

L'assistance médicale (30) peut alors diriger les opérations d'intervention à la connaissance de la localisation géographique de (1) fournie par le système de géolocalisation et du dossier médical client consulté dans la base de données. Pour assurer une redondance, les données consultées peuvent provenir soit des données figées personnelles codifiées, soit de la base de données à partir de l'identifiant client.

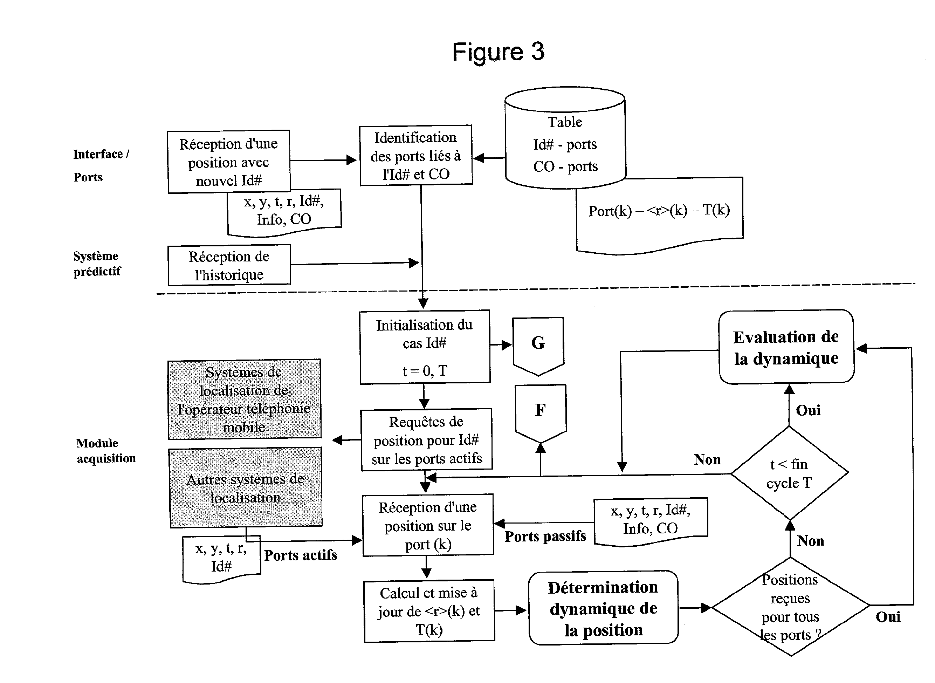

La figure 3 décrit les étapes d'acquisition de l'information par le système de géolocalisation.

Notons les définitions suivantes :
- x, y: Position.
- t: Instant de la détermination / calcul de la position par un système de géolocalisation.
- r: Marge d'erreur, en mètres, sur la position x, y donnée. Cette valeur est soit donnée par le système de géolocalisation et peut varier dans le temps, soit figée par port, suivant les standards de la technologie.
- R: Marge d'erreur considérée comme bonne. Une position avec r < R est considérée comme une bonne position. R est fixée par l'utilisation faite du système. Dans le domaine de l'assistance, on prendra R égal à 30 mètres.
- #Id: Identifiant unique de l'Elément Mobile.
- CO: Code pays et opérateur auquel est relié l'EM à l'instant t.
- Info: Information figée, propre à l'EM et transmise également à partir de l'EM avec la position.
- T: Durée du cycle. Tous les T, les ports actifs sont interrogés. T est fixé suivant l'utilisation faite du système. Dans le domaine de l'assistance, on prendra T = 2 minutes.
- T(k): Temps moyen de réponse du port k, entre l'instant t du calcul indiqué dans la position retournée et l'instant t' de réception par le système.
- <r> (k): Marge d'erreur moyenne du port k. Cette valeur peut être fixée par port suivant les standards de la technologie.
- d((x,y),(x2,y2)): Distance en mètres entre les points (x,y) et (x2,y2).
- Meilleure Position: Position (Xmp, Ymp) avec Rmp indiquant de manière fiable où se trouve l'élément mobile à l'instant t.
- Position Secondaire: Position (x,y) avec r < R, issue d'un cycle précédent, mais à l'instant t non contredite. La Position Secondaire n'est utilisée que si la Meilleure Position est telle que Rmp > R.
- Port actif: Port lié à un système de géolocalisation sur lequel est effectué une requête de positionnement à intervalle T. Une information au format x, y, t, r, #Id est retournée. Le paramètre r est éventuellement fixé.
- Port passif: Port lié à un système de géolocalisation qui envoit, sans réception de requête, à intervalle périodique, une information au format x, y, t, r, #Id, Info, CO. Le paramètre r est éventuellement fixé.

La figure 3 décrit le système de façon globale. A la réception d'un nouvel appel, le système reçoit de la part du terminal mobile, de préférence de façon redondante avec un message SMS sur réseau GSM et un envoi en mode paquet sur le réseau GPRS, ou alors par connexion UMTS, les données de position du mobile (calculée grâce aux moyens présents sur l'équipement mobile), l'instant de détermination de la mesure (par exemple l'heure d'envoi), l'identifiant Id# du client (du terminal, par exemple le numéro de téléphone), les données personnelles figées codifiées du client ainsi que le code du pays et de l'opérateur CO. Lorsque l'équipement mobile (EM) demande son positionnement, le GPS de son équipement type téléphone mobile est activé. Pour assurer une redondance et donc une fiabilité de géolocalisation, l'information est envoyée à la fois par SMS et par GPRS. De plus, l'EM étant relié à un réseau GSM, il transmet également le code opérateur qui permet d'identifier les ports actifs à interroger. Cet élément est essentiel dans le cas d'un EM hors de son réseau GSM normal (*roaming*) ou lorsqu'il est à sa limite de couverture (avec changement fréquent d'opérateurs suivant les variations du signal).

A la réception, le système identifie, grâce à une base de données dédiée, les ports de communication à utiliser, en fonction de l'identifiant unique de l'EM, du code pays et de l'opérateur.

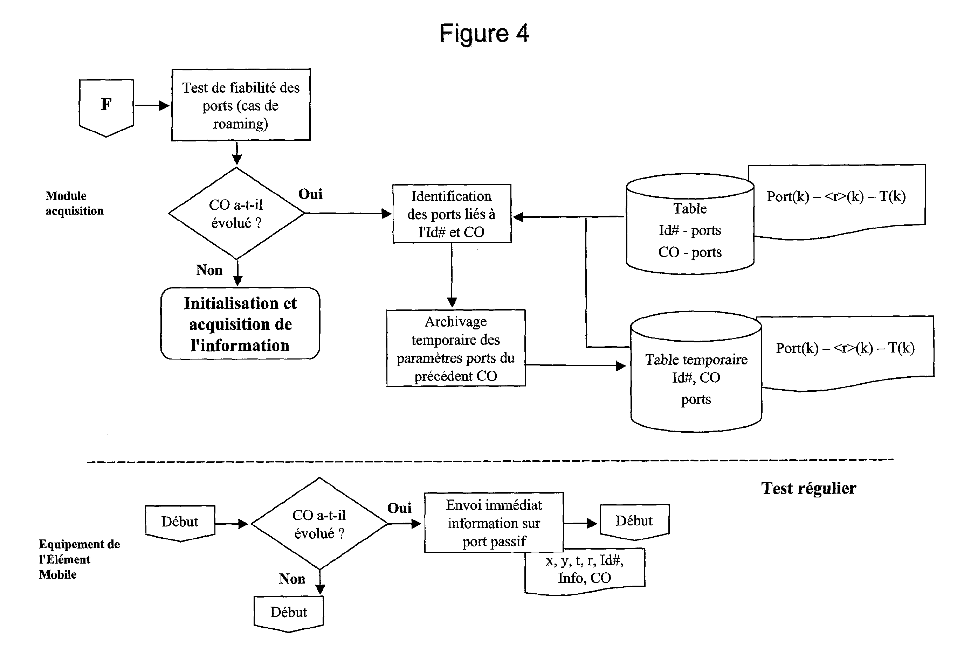

L'EM teste, à intervalle régulier, un éventuel changement de CO, comme illustré par la figure 4. En cas d'évolution, l'information standard incluant position et informations est transmise immédiatement avec le nouveau CO par l'EM au système, qui de son côté, teste à chaque cycle cette donnée. A la réception d'un nouveau CO, les données liées au CO (temps de réponse, précision lors de ce cas) sont archivées, dans l'éventualité d'un retour au précédent CO. Les nouveaux ports actifs liés au nouveau CO sont identifiés, et les requêtes adaptées en conséquence. Cette question du *roaming* permet, non seulement, d'étendre la géolocalisation hors de la zone de l'opérateur habituel mais également, d'assurer une fiabilité du système. Les zones frontières sont relativement instables, un mobile pouvant changer régulièrement de réseau sur une période de temps relativement courte.

Dans le cadre d'un système pré-événementiel décrit ci-après, le système reçoit en outre l'historique des mesures effectuées par le mobile.

Toujours illustré par la figure 3, le système effectue alors des requêtes de position pour l'identifiant Id# aux systèmes de localisation de l'opérateur de téléphonie mobile.

Les positions calculées par le système de localisation de l'opérateur mais aussi par d'autres systèmes de localisation, ces différents moyens étant considérés comme de multiples sources de données de géolocalisation, sont reçues sur les ports de communication correspondants. La position envoyée de façon périodique, par exemple toutes les 2 minutes pendant une durée de 45 minutes, par le mobile est aussi reçue sur des ports passifs dédiés à cette tache.

La marge moyenne et le temps moyen de réponse de chacun des ports sont calculés puis la position de l'équipement est déterminée de façon dynamique (voir ci-après) tant que tous les systèmes de localisation (c'est-à-dire tous les ports) n'ont pas envoyé leur position calculée.

Une fois toutes les positions reçues, ou à la fin du cycle, le système évalue la dynamique de l'ensemble des systèmes de localisation afin d'adapter le temps d'acquisition des positions.

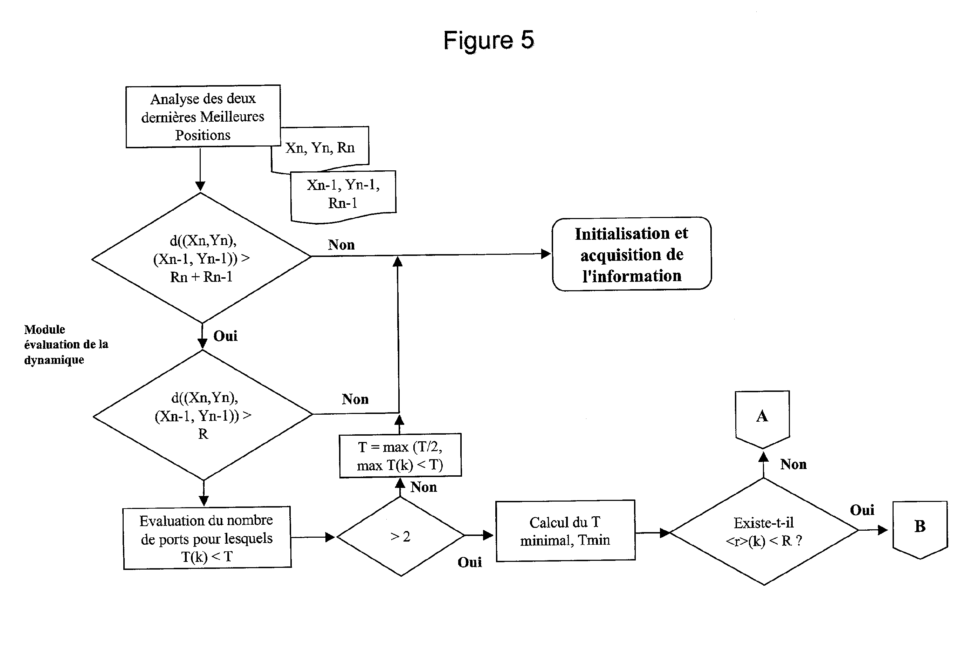

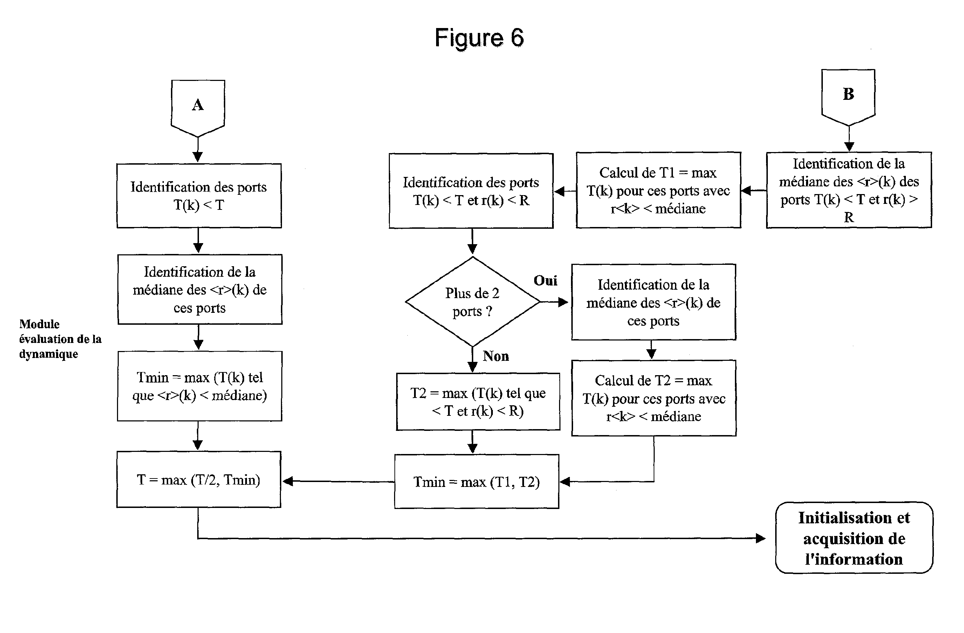

En référence aux figures 5 et 6, l'évaluation de la dynamique est décrite. Cette évaluation dynamique permet d'adapter la fréquence de localisation afin d'obtenir une géolocalisation plus fiable : meilleur suivi de l'évolution de l'EM et également possibilité d'évaluer les positions lors d'un même cycle de temps. Sans cette adaptation, l'évaluation pourrait être faussée de manière significative car si le déplacement est trop important sur le cycle, non adapté, la dernière position reçue est probablement la plus fiable, et ce quelle que soit sa précision.

L'analyse des deux dernières meilleures positions détermine si les mesures sont proches. Par exemple si la distance entre ces deux mesures reste inférieure à la somme des marges d'erreur des deux mesures.

Dans le cas où les mesures sont proches, le système est opérationnel et peut réaliser la mesure suivante.

Dans le cas où ces mesures sont trop éloignées (distance supérieure à la marge d'erreur tolérée), le temps de cycle est trop long et on le modifie. Cette diminution du cycle est limitée afin de conserver un nombre suffisant de réponses fiables. Cette valeur seuil est calculée suivant les marges d'erreurs des mesures (et donc des ports) ainsi que leur temps de réponse.

Si aucun port actif ne donne de mesure de position suffisamment précise (A) alors la valeur de cycle minimale est fixée comme la valeur maximale des temps de réponse des ports actifs pour lesquels la marge d'erreur est en dessous de la médiane des marges d'erreurs.

Si au moins un port actif fournit une mesure relativement fiable (B), alors la valeur de cycle minimale est calculée en fonction de la médiane des temps de réponse des mesures fiables et de celle des temps de réponse des mesures non fiables. On conservera alors une précision acceptable sur le nouveau cycle tout en garantissant une fiabilité (cas de brusques allongements des temps de réponse de certains ports sur le cycle suivant).

Ensuite, la nouvelle valeur de cycle est évaluée à l'aide de la valeur de cycle minimale et de la moitié de l'ancienne valeur de temps de cycle. La plus grande des deux valeurs est retenue comme nouvelle durée du cycle. Puis, de nouvelles acquisitions de positions sont effectuées.

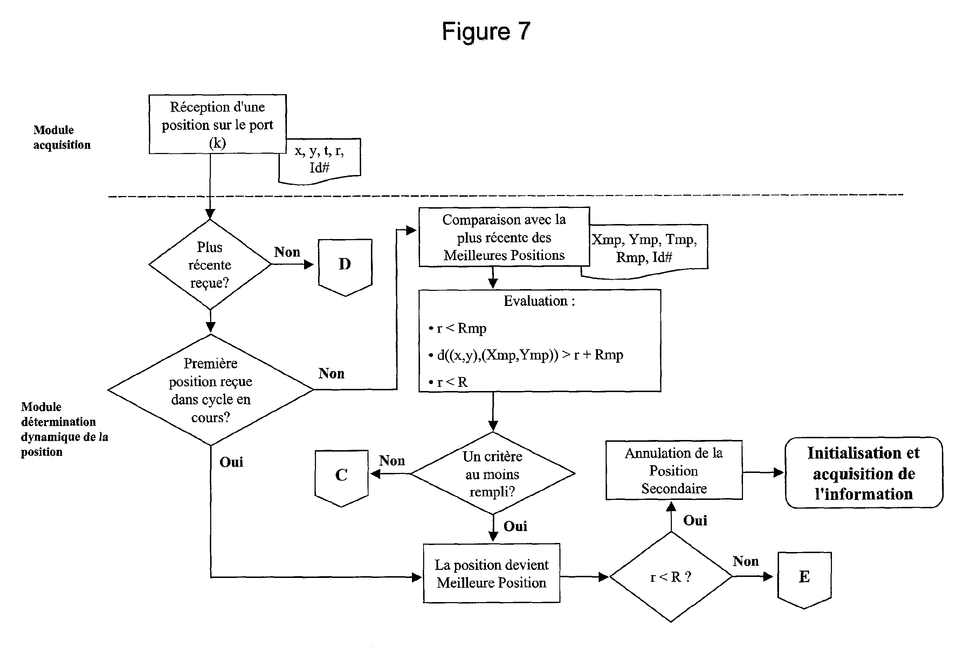

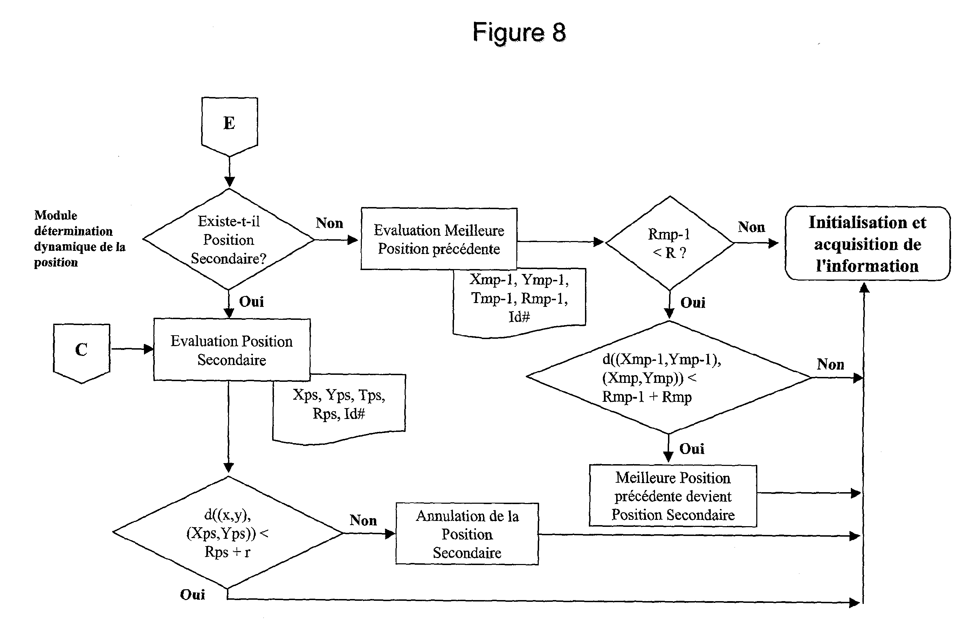

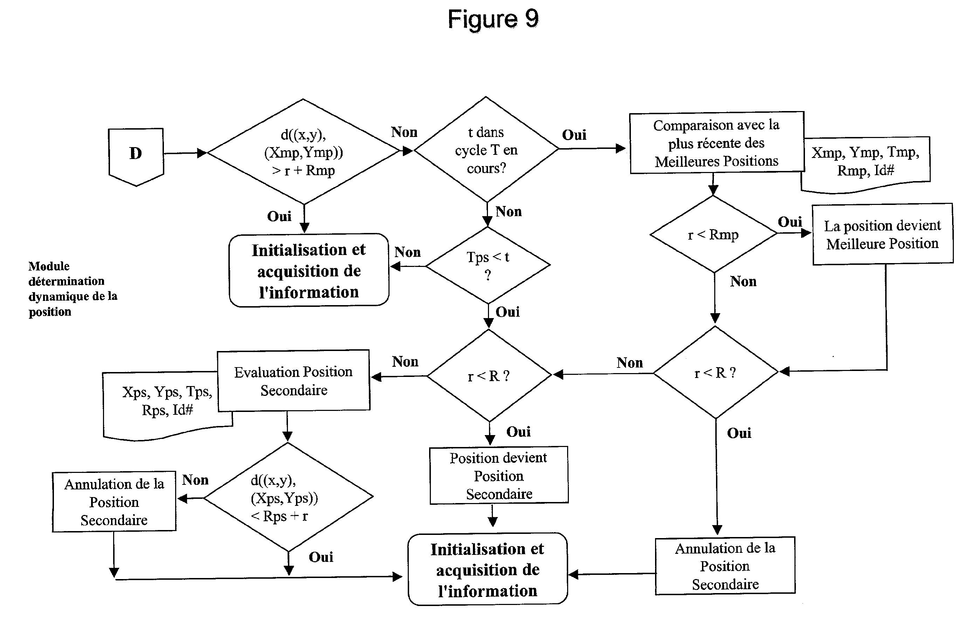

En références aux figures 7, 8 et 9, la détermination dynamique de la position est effectuée à chaque réception d'une nouvelle position sur un port de communication du système.

La détermination en temps réel permet de recevoir des données de géolocalisation de plusieurs sources différentes pour plus de fiabilité, avec surtout la possibilité de les recevoir à des instants aléatoires. Ce dernier point est critique dès lors que l'on suit un EM sur une période de temps à partir de plusieurs sources : le système peut ignorer une position non reçue ou en recevoir une plus ancienne tout en l'utilisant pour affiner le positionnement.

Si la nouvelle position est la première reçue dans le cycle, elle est par défaut prise comme meilleure position. Dans le cas contraire, un critère validé parmi trois permet de la retenir : elle a une marge d'erreur inférieure à celle tolérée, elle est dissociée de la précédente meilleure position (il y a donc eu déplacement) ou sa précision est supérieure à celle de la meilleure position existante.

Dans tous les cas, cette position reçue va être confrontée à la position secondaire. La position secondaire existe lorsque la meilleure position n'a pas une précision considérée comme satisfaisante (marge d'erreur) et qu'une meilleure position précédente possédait une marge d'erreur répondant au critère fixé. Cette meilleure position, tant qu'une position plus récente ne l'a pas mise en défaut, est conservée en tant que position secondaire. Dès le retour d'une meilleure position de qualité satisfaisante, elle disparaît.

La position secondaire répond notamment à la problématique de la dégradation de la qualité de positionnement des systèmes de géolocalisation (perte de GPS,... .) alors que l'EM n'est pas en déplacement de manière significative.

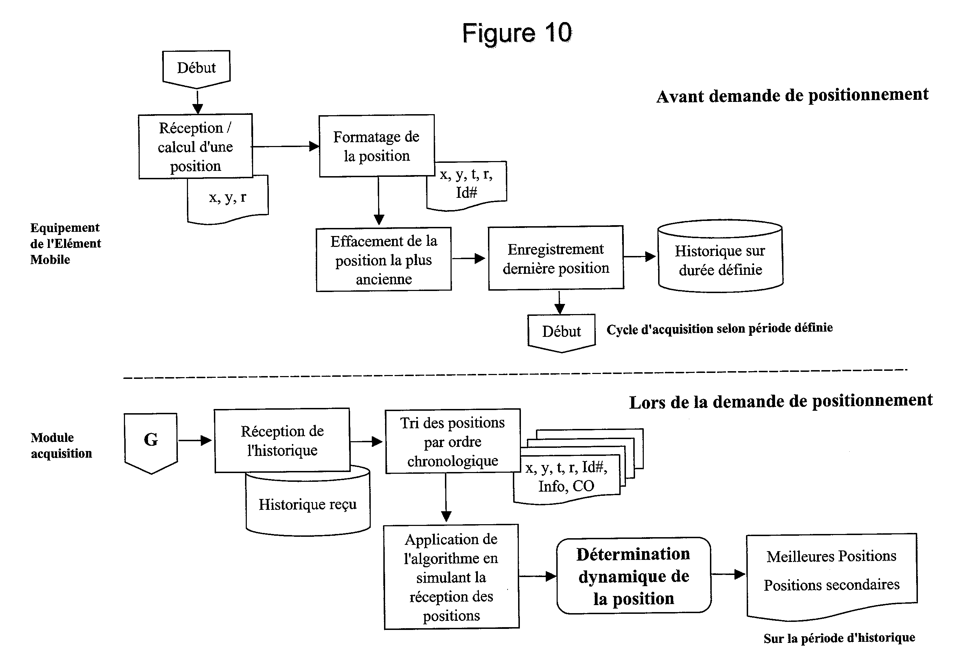

Enfin, en référence à la figure 10, le système prévoit une détermination pré-événementielle de la position sur la base des données de positions historisées dans le terminal mobile. A la réception des données de l'historique, les positions historiques sont rejouées, c'est-à-dire triées par ordre chronologique et transmises au module de détermination dynamique de la position comme décrit précédemment. Ce dernier fournit alors des meilleures positions pré-événementielles ainsi que des positions secondaires.

Ce système pré-événementiel permet de rendre la géolocalisation plus fiable sur les premiers instants de la période : une position secondaire a pu déjà être déterminée, voire la dynamique du mouvement peut être reconstituée immédiatement sur l'écran d'un opérateur (succession des meilleures positions).

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de géolocalisation d'un équipement mobile (EM) par un système de géolocalisation, ledit EM comprenant des moyens de géolocalisation propres **caractérisé en ce que** ledit procédé comprend les étapes de :
• transmission (T1) des données issues desdits moyens de géolocalisation au dit système de géolocalisation, la transmission étant réalisée de manière redondante sur un réseau de télécommunications mobiles ;
• détermination d'une position de l'EM en temps réel par traitement des données de géolocalisation reçues de sources multiples.

2. Procédé de géolocalisation selon la revendication 1, **caractérisé en ce que** ladite redondance est effectuée par un envoi d'au moins un message du type SMS et par une connexion en mode paquet du type GPRS.

3. Procédé de géolocalisation selon la revendication 1, **caractérisé en ce que** ladite redondance met en oeuvre au moins une connexion UMTS.

4. Procédé de géolocalisation selon la revendication 1 ou 2 ou 3, **caractérisé en ce que** ladite position de l'EM déterminée par le système de géolocalisation est recalculée dynamiquement en temps réel, c'est-à-dire à chaque arrivée de nouvelles données de position.

5. Procédé de géolocalisation selon l'une des revendications précédentes, **caractérisé en ce que** ladite transmission (T1) s'accompagne de la transmission de l'identifiant unique de l'EM et **en ce que** ledit procédé comprend, en outre, une étape de détermination d'une position de l'EM par l'opérateur téléphonique.

6. Procédé de géolocalisation selon la revendication précédente, **caractérisé en ce que** ladite étape de détermination par l'opérateur téléphonique met en oeuvre l'analyse du signal émis par l'EM et reçu par une station de base d'une cellule du réseau de télécommunications mobiles (technologie Cell-ID).

7. Procédé de géolocalisation selon la revendication 5, **caractérisé en ce que** ladite étape de détermination par l'opérateur téléphonique est réalisée par triangulation (technologie OTDOA en 3G et E-OTD en 2G).

8. Procédé de géolocalisation selon la revendication 5, **caractérisé en ce que** ladite étape de détermination par l'opérateur téléphonique met en oeuvre le A-GPS (*Assisted Global Positionning System*).

9. Procédé de géolocalisation selon l'une quelconque des revendications 1 à 8, **caractérisé en ce que** ledit traitement des données de géolocalisation consiste en une comparaison desdites données.

10. Procédé de géolocalisation selon l'une quelconque des revendications précédentes, **caractérisé en ce qu'**il comprend, en outre, une étape d'historisation desdites données issues des moyens de géolocalisation sur l'EM et une étape de transmission (T2) audit système d'au moins une partie desdites données historisées.

11. Procédé de géolocalisation selon la revendication précédente, **caractérisé en ce qu'**il comprend, en outre et préalablement à ladite étape de détermination, une étape de détermination d'une position de l'EM sur la base desdites données d'historisation transmises.

12. Procédé de géolocalisation selon la revendication 10 ou 11, **caractérisé en ce qu'**il comprend, en outre, une étape de détermination des meilleures secondes positions en rejouant lesdites données d'historisation.

13. Procédé de géolocalisation selon l'une quelconque des revendications précédentes, **caractérisé en ce que** la fréquence de géolocalisation dudit système est adaptée en fonction de la dynamique de l'EM.

14. Procédé de géolocalisation selon l'une quelconque des revendications précédentes, **caractérisé en ce que** la fréquence de géolocalisation dudit système est adaptée en fonction des temps de réponse et de la précision des moyens de géolocalisation associées auxdites sources multiples.

15. Procédé de géolocalisation selon l'une quelconque des revendications précédentes, **caractérisé en ce qu'**il comprend, en outre, une étape de détermination d'une seconde position, ladite seconde position étant antérieure et plus précise que ladite première position.

16. Procédé de géolocalisation selon l'une quelconque des revendications précédentes, **caractérisé en ce qu'**il comprend, en outre, une étape d'envoi par ledit système d'un ensemble de données personnelles sur ledit équipement mobile.

17. Procédé de géolocalisation selon l'une quelconque des revendications 1 à 16, **caractérisé en ce que** lesdits moyens de géolocalisation mettent en oeuvre un GPS (*Global Positionning System).*

18. Procédé de géolocalisation selon l'une quelconque des revendications 1 à 16, **caractérisé en ce que** lesdits moyens de géolocalisation mettent en oeuvre un A-GPS *(Assisted Global Positionning System).*

19. Procédé de géolocalisation selon l'une quelconque des revendications précédentes, **caractérisé en ce que** lesdites données transmises lors de l'étape (T1) comprennent un identifiant unique de l'équipement mobile, les coordonnées déterminées par lesdits moyens de géolocalisation et une donnée d'horodatage.

20. Procédé de géolocalisation selon la revendication précédente, **caractérisé en ce que** lesdites données transmises lors de l'étape (T1) comprennent, en outre, des données personnelles.

21. Procédé de géolocalisation selon la revendication précédente, **caractérisé en ce qu'**il comprend, en outre, une étape de détermination par ledit EM du changement de code pays et opérateur CO (*roaming*) et d'adaptation des connexions entre l'EM et ledit système de géolocalisation en fonction des caractéristiques réseaux de ce nouveau CO.

22. Equipement mobile de géolocalisation du type téléphone mobile ou assistant personnel, **caractérisé en ce qu'**il comprend :
• des moyens de géolocalisation ;
• des moyens de transmission sur un réseau GSM de données sous forme de message type SMS ;
• des moyens de transmission sur un réseau GPRS ; et
• un module réalisant l'interfaçage entre eux de ces différents moyens.

23. Equipement mobile de géolocalisation selon la revendication précédente, **caractérisé en ce qu'**il comprend, en outre, des moyens d'historisation des données issues desdits moyens de géolocalisation.

24. Système de géolocalisation d'un équipement mobile selon l'une des revendications 22 et 23, **caractérisé en ce qu'**il comprend un centre de géolocalisation, des moyens de connexion par un réseau téléphonique entre ledit centre et ledit équipement mobile, des moyens de connexion entre ledit centre et des sources de géolocalisation.

25. Système de géolocalisation d'un équipement mobile selon l'une des revendications 22 et 23, pour la mise en oeuvre du procédé selon l'une quelconque des revendications 1 à 21.
